# FASCICULE DE BREVET EUROPEEN

(11) **EP 2 461 394 B1**
(45) Date de publication et mention de la délivrance du brevet: **16.11.2016**
(21) Numéro de dépôt: 11191906.4
(22) Date de dépôt: 05.12.2011
(51) Int. Cl.: H01M 2/10, H01M 2/12, B60L 3/00, B60L 11/00, B60L 11/18, H01M 10/625

(54) **Flasque stockeur d'énergie et son procédé de fabrication**
Energiespeicherflansch und sein Herstellungsverfahren
Energy-storage flange and method for manufacturing same

(30) Priorité: 06.12.2010 FR 1060132
(43) Date de publication de la demande: 06.06.2012
(73) Titulaire: VALEO EQUIPEMENTS ELECTRIQUES MOTEUR, 94046 Créteil Cedex (FR)
(72) Inventeur: Guerin, Fabien, 92320 CHATILLON (FR); Gervais, Hugues, NOISIEL 77186 (FR); Hosni, Alexis, PARIS 75018 (FR)

(56) Documents cités:
- EP-A1- 2 290 728
- WO-A1-2008/038916
- JP-A- 2000 223 099
- US-A1- 2007 132 429
- US-A1- 2009 297 892
- US-A1- 2010 119 929
- US-A1- 2010 136 405

## Description

### DOMAINE DE L'INVENTION

L'invention se rapporte aux stockeurs d'énergie électrique pour véhicule automobile tels que des condensateurs ou des accumulateurs.

Elle concerne également son procédé de fabrication.

### ETAT DE LA TECHNIQUE

De tels stockeurs d'énergie peuvent être utilisés pour lisser les courants électriques d'alimentation de machines électriques motrices et/ou génératrices de véhicules hybrides. Aussi, un besoin nouveau se fait sentir de disposer de composants de grande capacité électrique pouvant recevoir une intensité électrique élevée. Des condensateurs à double couche électrique (EDLC) existent mais sont limités en diamètre et en capacité électrique, notamment pour des raisons d'évacuation des calories. Le recours à plusieurs condensateurs disposés en série et/ou en parallèle engendre des coûts de raccordement électrique et d'assemblage que l'on cherche à réduire.

Dans le document US 2007/0132429 le stockeur d'énergie comporte plusieurs batteries du type lithium-ion et un cadre pour maintenir les batteries. Le cadre est en trois parties à savoir deux parties externes et une partie interne prise en sandwich entre les deux parties externes.

Les parties externes comportent chacune deux portions de retenue des batteries reliées par une entretoise.

La partie interne est dédiée aux raccordements électriques et comporte quatre portions de retenue des batteries et une entretoise entre les portions de retenue des batteries.

Dans ce document le recours à plusieurs batteries engendre également des coûts de raccordement électrique et d'assemblage.

### OBJET ET RESUME DE L'INVENTION

L'invention propose un stockeur d'énergie électrique pour véhicule et un procédé de fabrication de tels stockeurs qui remédient à au moins l'un des problèmes précités.

Un but de l'invention est d'augmenter la capacité électrique des stockeurs d'énergie tout en optimisant leur compacité globale.

Ce but et ces souhaits sont est atteints par les revendications 1 et 14.

Selon l'invention, le stockeur d'énergie électrique pour véhicule automobile comprend une pluralité de cellules de stockage d'énergie électrique d'orientation axiale. Le stockeur comprend au moins un flasque présentant une pluralité d'éléments de maintien. Chacun des éléments de maintien coopère avec une des cellules pour maintenir chacune des cellules dans une position fixe relativement aux autres cellules. Chacune des cellules est séparée des autres cellules par un espace d'une distance supérieure à un seuil déterminé.

Selon l'invention, les éléments de maintien comportent une pluralité de pions saillant d'écartement entre les cellules et de saillies axiales présentant chacune une forme correspondante à celle de l'extrémité périphérie externe de chacune des cellules.

Selon l'invention, il est prévu une pluralité de surfaces radiales coplanaires formant un épaulement avec les saillies axiales, qui s'étendent à la périphérie externe de surfaces radiales et sont configurées pour maintenir l'extrémité périphérique de la cellule concernée.

Les pions s'étendent axialement sur une longueur globalement égale à celle des saillies.

Le flasque commun permet de maîtriser la position relative des cellules de stockage d'énergie et d'optimiser le compromis entre la nécessaire compacité d'ensemble et la dissipation thermique, même pour une cellule de stockage qui serait entourée d'autres cellules.

Dans un exemple de réalisation, au moins une partie des cellules est de type condensateur, tel qu'un condensateur à double- couche permettant de stocker plus d'énergie et de la restituée rapidement.

Dans une variante, au moins une partie des cellules est de type accumulateur, tel qu'une batterie lithium-ion à forte densité énergétique et à autodécharge réduite.

Selon l'invention, le flasque peut être en matériau électriquement isolant. De la sorte, les cellules n'ont pas besoin d'être entourées individuellement d'un film isolant électriquement. Cela facilite l'évacuation des calories.

Chaque cellule présente au moins deux pôles électriques, le stockeur peut présenter au moins deux bornes électriques.

Les cellules pourront être groupées par paire.

Selon un mode de réalisation, le stockeur comprend une série d'éléments conducteurs de raccordement reliant électriquement chaque pôle électrique d'une des cellules à une borne électrique du stockeur et/ou à un pôle électrique d'une autre cellule. Cela permet toutes les combinaisons souhaitées de raccordement en série ou en parallèle de certaines cellules de stockage d'énergie par rapport à d'autres.

Avantageusement, la série d'éléments conducteurs de raccordement peut comprendre une ou plusieurs barres conductrices, laquelle barre est encliquetée dans le flasque, et/ou est maintenue par des ergots faisant saillie du flasque, ou est en partie noyée dans le flasque par surmoulage dudit flasque. Le positionnement par le flasque des barres conductrices par rapport aux cellules facilite le raccordement électrique des bornes électriques des cellules entre elles.

Par exemple, au moins une des barres conductrices est soudée ou brasée sur un pôle électrique d'une cellule.

Dans un mode de réalisation, le positionnement des barres conductrices par rapport aux cellules est tel que le flasque ne s'étend pas au voisinage de l'endroit de la barre conductrice raccordée électriquement au pôle de la cellule. Ainsi, une soudure laser est possible entre la barre et le pôle électrique à raccorder sans que la chaleur de la soudure ne dégrade le flasque en matériau synthétique.

Avantageusement, la série d'éléments conducteurs peut comprendre au moins un fil souple fixé au flasque ou guidé par rapport au flasque, soit directement par une forme adaptée du flasque, soit indirectement par un élément rapporté sur le flasque. Le maintien des fils dans une position prédéterminée facilite l'assemblage ultérieur du stockeur.

Selon l'invention, le flasque comprend au moins un orifice de guidage traversé par un des pôles électriques d'une des cellules.

Avantageusement les cellules peuvent comprendre une portion cylindrique, les deux pôles électriques étant centrés radialement et faisant saillie axialement de la portion cylindrique,

La portion cylindrique pourra appartenir au corps principal que présente la cellule.

Avantageusement, le stockeur peut comprendre deux flasques en regard l'un de l'autre, entre lesquels sont disposées les cellules. Les deux flasques peuvent être de structure identique.

Avantageusement, le stockeur peut comprendre au moins trois cellules s'étendant axialement suivant des axes trois cellules s'étendant axialement suivant des axes parallèles en étant réparties dans au moins deux plans parallèles, les axes des cellules d'un premier plan étant intercalés par rapport aux axes des cellules d'un second plan adjacent au premier plan, suivant une direction qui est parallèle aux premier et second plans et orthogonale aux axes des cellules. Cela permet d'optimiser la compacité d'ensemble.

Dans un mode de réalisation, le flasque présente un conduit intérieur vide s'étendant entre une ouverture extérieure située au voisinage d'un plan extrême de répartition des cellules qui pourra être placé sur la partie supérieure de l'ensemble et une ouverture intérieure située au voisinage d'un orifice de guidage d'une cellule d'un autre plan qui pourra être placé dans la partie inférieure. En cas d'utilisation du stockeur d'énergie hors des plages d'utilisation recommandées d'intensité électrique ou de température, il se peut que la dégradation correspondante d'une cellule de stockage entraîne l'émanation de gaz, par exemple au voisinage du pôle central de la cellule. La cheminée de dégazage permet alors d'éviter une explosion du stockeur d'énergie.

Selon un mode de réalisation, le stockeur comprend une cuve conductrice thermiquement, le flasque présentant au moins une surface de guidage extérieure coopérant directement ou indirectement avec la cuve pour positionner les cellules dans la cuve de manière que chacune des cellules soit séparée de la cuve par un espace d'une distance supérieure à un seuil (e) déterminé.

Avantageusement, toutes les cellules de stockage d'énergie du stockeur peuvent être plongées au moins en partie dans de la résine thermo-conductrice et isolante électriquement et dans lequel la résine présente une interface avec l'air atmosphérique dans la cuve, l'ouverture extérieure du conduit étant située au voisinage de ladite interface.

Avantageusement le flasque est ajouré pour passage de la résine. Un bon ancrage du flasque dans la cuve est ainsi réalisé.

Selon un mode de réalisation, au moins un flasque comprend au moins un crochet de préhension.

Selon un autre aspect, l'invention porte également sur un procédé de fabrication d'un stockeur d'énergie électrique pour véhicule dans lequel on positionne plusieurs cellules de stockage d'énergie à une distance minimum les unes des autres supérieure à un seuil déterminé, en assemblant chacune d'elles sur un flasque commun.

De préférence, on assemble au moins une barre conductrice sur le flasque commun puis on soude ou brase un pôle électrique d'une ou de plusieurs cellules sur la barre pré-assemblée.

Par exemple, on peut introduire dans une cuve un ensemble fabriqué comme précédemment indiqué, puis on insère de la résine dans les espaces entre les cellules et entre les cellules et la cuve.

### BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :
- la figure 1 est une perspective cavalière d'un premier mode de réalisation d'un stockeur d'énergie vu de face,
- la figure 2 est une perspective cavalière du premier mode de réalisation vu de dos,
- la figure 3 est une vue de côté du premier mode de réalisation,
- la figure 4 est une coupe selon le plan IV-IV de la figure 3 d'un deuxième mode de réalisation,
- la figure 5 est une vue d'un côté intérieur du flasque,
- la figure 6 est une coupe partielle du stockeur d'énergie en cours de fabrication selon le plan VI-VI de la figure 4, et
- la figure 7 est une coupe partielle du stockeur d'énergie selon le plan VII-VII de la figure 6.

### DESCRIPTION DETAILLEE

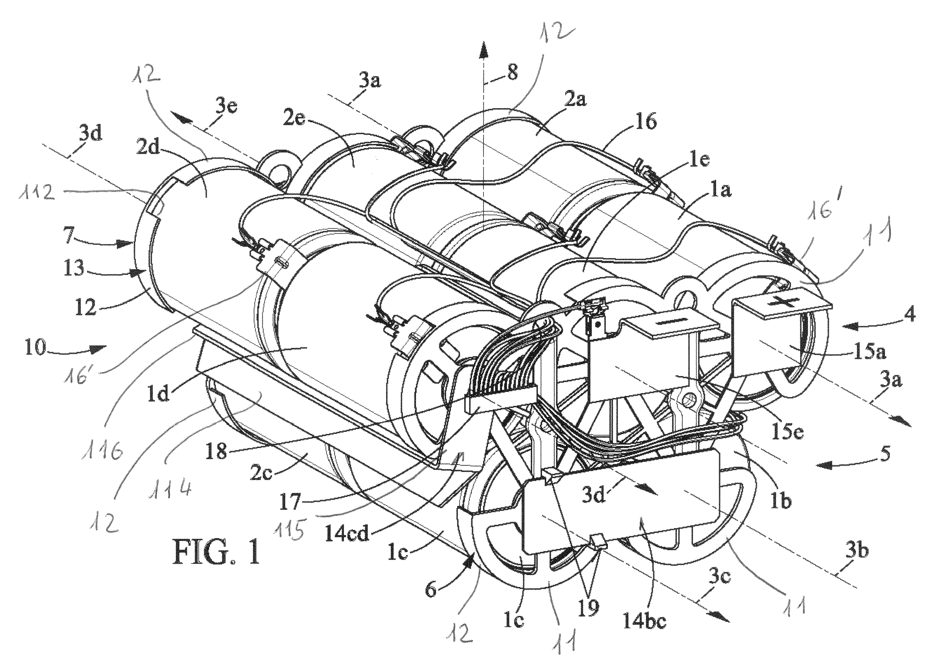

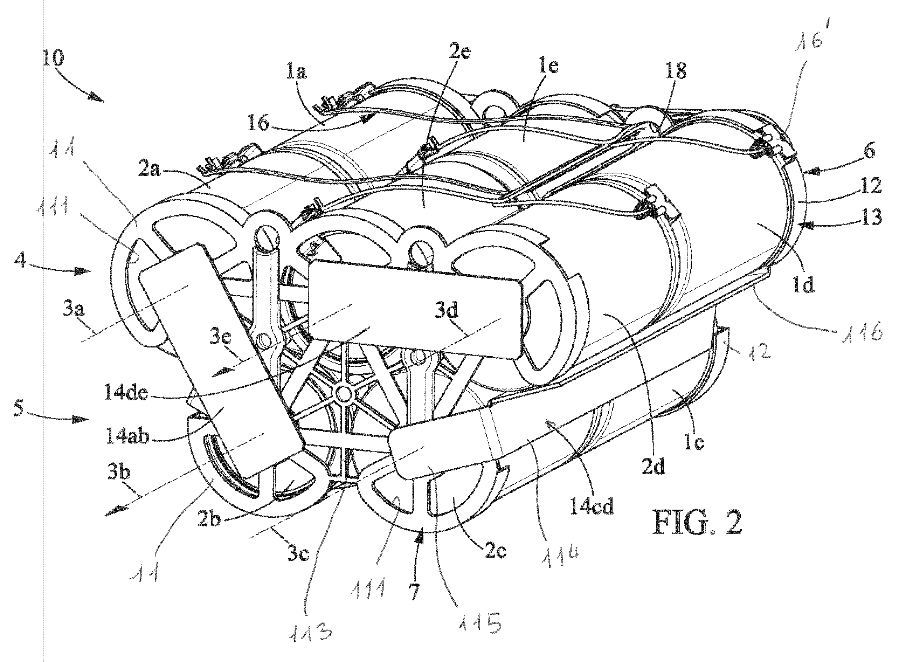

Pour la clarté de la description, on désigne par « avant » les éléments situés ou tournés vers l'extrémité longitudinale visible en figure 1, et par « arrière » les éléments situés ou tournés vers l'extrémité opposée visible en figure 2.

Comme illustré aux figures 1 à 3, le premier mode de réalisation de stockeur d'énergie peut former un ensemble 10 monobloc comprenant par exemple dix cellules de stockage d'énergie, identiques, qui sont réparties par exemple en cinq cellules avant 1a, 1b, 1c, 1d, 1e dont trois cellules 1a, 1e, 1d peuvent être situées sur une couche supérieure 4 et deux cellules 1b, 1c sont situées sur une couche inférieure 5. De même, l'ensemble 10 comprend cinq cellules arrière 2a, 2b, 2c, 2d, 2e dont trois cellules 2a, 2e, 2d sont situées sur la même couche supérieure 4 et deux cellules arrière 2b, 2c sont situées sur la même couche inférieure 5. Chacune des cellules de stockage d'énergie 1a à 1e et 2a à 2e est cylindrique. Elles sont regroupées par paires constituées d'une cellule avant 1a et d'une cellule arrière 2a correspondantes, alignées sur le même axe 3a. De même, les cellules 1b, 2b sont alignées sur l'axe 3b, les cellules 1c, 2c sont alignées sur l'axe 3c, les cellules 1d, 2d sont alignées sur l'axe 3d et les cellules 1e, 2e sont alignées sur l'axe 3e. Tous les axes 3a, 3b, 3c, 3d, 3e sont parallèles et définissent des orientations axiales. Les axes 3b, 3c de la couche inférieure 5 sont décalés par rapport aux axes 3a, 3e, 3d de la couche supérieure 4. Les axes des cellules d'un premier plan sont intercalés par rapport aux axes des cellules d'un second plan adjacent au premier plan et ce suivant une direction qui est parallèle aux premier et second plans et orthogonale aux axes des cellules, qui sont d'orientation axiale.

L'ensemble 10 comprend également un flasque avant 6 et un flasque arrière 7 qui, par exemple, sont de structure identique et disposés symétriquement par rapport à un axe central vertical 8 qui est perpendiculaire aux couches supérieure et inférieure 4, 5 et coupe l'axe 3e au milieu de la paire de cellules 1e, 2e.

Les flasques 6, 7 pourront être en matériau électriquement isolant. Ils pourront être en matière synthétique, telle que du polyamide PA 6-6.

Comme visible dans les figures, les flasques 6, 7 sont ajourés et configurés pour recevoir les extrémités des cellules respectivement avant 1a à 1e et arrière 2a à 2e.

Ces flasques présentent une pluralité d'éléments de maintien 13 des cellules de manière décrite ci-après.

Plus précisément le flasque avant 6 comprend une pluralité de surfaces radiales d'appui 11 de manière décrite ci-après, toutes coplanaires, et une pluralité de saillies axiales 12 s'étendant axialement vers l'arrière et présentant chacune une forme en arc de cercle correspondant au diamètre extérieur de chacune des cellules avant 1a à 1e. Les surfaces radiales 11 s'étendent chacune perpendiculairement à l'axe 3a, 3b, 3c, 3d, 3e concerné, tandis que les saillies axiales périphériques 12 s'étendent chacune axialement par rapport à l'axe 3a, 3b, 3c, 3d, 3e concerné, comme mieux visible dans les figures 1 et 2. Les surfaces radiales 11 ont une forme annulaire. Ces surfaces 11 s'étendent angulairement sur moins de 360° de manière décrite ci-après. Les extrémités des cellules ne sont donc pas entièrement recouvertes par les surfaces 11.

Les saillies axiales 12 s'étendent à la périphérie externe des surfaces radiales 11 et forment un épaulement avec les surfaces radiales 11. Les surfaces 11 et les saillies 12 appartiennent ensembles à une pluralité d'éléments de maintien 13 permettant l'alignement le centrage et l'immobilisation relative de chacune des cellules avant 1a à 1e. Il en est de même pour le flasque arrière 7, qui comprend **donc** une pluralité d'éléments de maintien 13 permettant l'alignement, le centrage et l'immobilisation relative de chacune des cellules arrières 2a à 2e.

Les cellules 1a à 1e - 2a à 2e sont maintenues entre les deux flasques 6, 7. Au moins l'un des flasques 6, 7 présente des crochets 19 décrits ci-après.

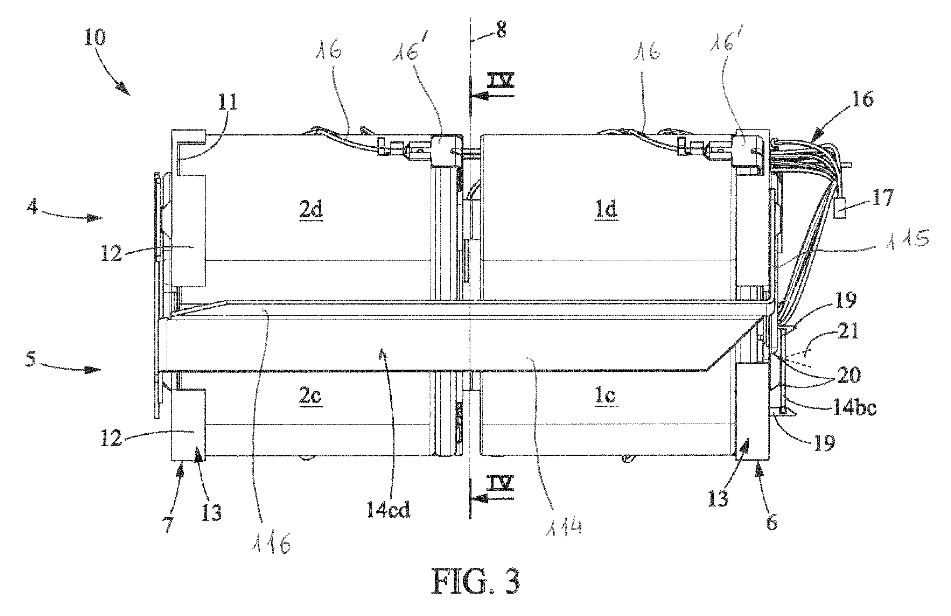

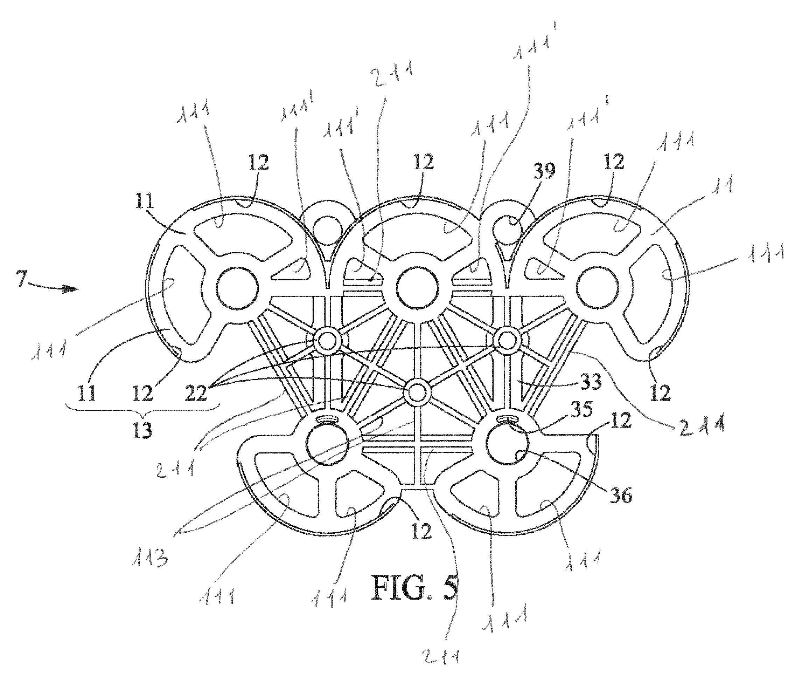

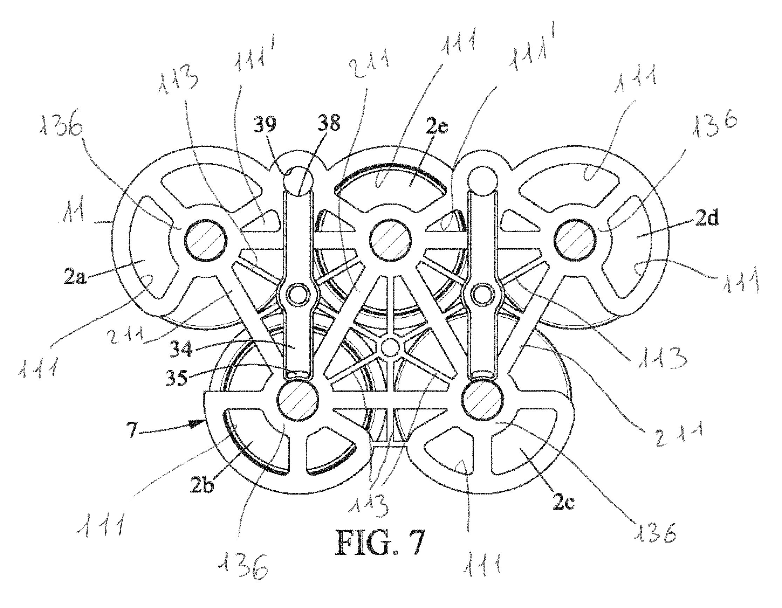

Comme mieux visible dans les figures 5 et 7, les flasques 6, 7, qui dans ce mode de réalisation sont identiques aux nombre de crochets 19 près, présentent au niveau de chacune des cellules supérieures, respectivement 1a, 1e, 1d et 2a, 2e, 2d, deux saillies 12 axiales supérieures et une surface radiale 11 annulaire supérieure ajourée à la faveur ici de trois fenêtres 111. Certaines des fenêtres 111 sont de plus petite taille. Les deux saillies supérieures 12 sont séparées l'une de l'autre par un dégagement 112. Ces saillies supérieures s'étendent ainsi sur moins de 360° Certains des dégagements 112 sont utilisés pour le passage de cosses électriquement conductrices 16' dimensionnées en conséquence. Ces cosses 16' sont du type conventionnel et fixées, comme visible par exemple dans les figures 1 et 3, par sertissage chacune sur une extrémité dénudée d'un fil électrique 16. Les deux saillies supérieures 12 et le dégagement 112 ainsi que la surface supérieure 11 associée s'étendent angulairement sur plus de 180° comme mieux visible dans les figures 1, 2, 5 et 7. Au niveau de chacune des cellules inférieures respectivement 1b, 1c et 2b, 2c il est prévu (Figures 1, 2, 5, 7) une seule saillie inférieure 12, qui s'étend angulairement sur moins de 180°, ainsi que sa surface radiale 11 annulaire inférieure associée, qui est ajouré à la faveur ici de deux fenêtres 111 de taille différente.

Chaque surface supérieure et inférieure 11 comporte un orifice central référencé en 36 à la figure 5, qui est un orifice de guidage d'un pôle électrique 53a, 53b de la cellule concernée de manière décrite ci-après et au moins deux fenêtres 111 avec présence d'un anneau central 136 entre les fenêtres 111 et l'orifice central 36. Les fenêtres consécutives d'une même surface d'appui 11 sont séparées les unes des autres par des bras (non référencés) comme mieux visible dans les figures 5 et 7.

Suivant une caractéristique les surfaces radiales 11 constituent centralement à la faveur de leurs anneaux 136 des surfaces radiales d'appui pour les cellules. Les anneaux 136 délimitent les orifices 36, qui constituent l'orifice central d'un anneau 136.

Les anneaux centraux d'appui 136 sont reliés entre eux par un réseau de bras de liaison 211 rayonnant. Ainsi les anneaux 136 des surfaces radiales supérieures 11, associées à la couche supérieure 4, sont reliées aux anneaux 136 correspondants des surfaces radiales inférieures 11 associées à la couche inférieure 5 par une pluralité de bras 211 inclinés, qui pourront être nervurés. Un bras 211 supplémentaire, qui pourra être nervuré, relie entre eux les deux anneaux 136 des deux surfaces d'appui radiales 11 inférieures. Ce bras 211 est horizontal dans les figures 5 et 7. Chaque anneau 136 d'une surface supérieure 11 est relié par un bras 211 horizontal supplémentaire dans les figures 5 et 7, qui pourra être nervuré, à un anneau 136 adjacent d'une autre surface supérieure 11. Les bras inclinés 211 déterminent l'écartement entre les surfaces inférieures et supérieures 11. La longueur de ces bras inclinés 211 dépend donc du diamètre des cellules.

Ainsi qu'il ressort des figures 5 et 7 il est formé à la faveur des bras 211 trois triangles dont les sommets sont délimités par les anneaux 136 d'appui des surfaces 11.

Ces triangles sont ici globalement de forme équilatérale, le triangle central étant dirigé en sens inverse par rapport aux deux autres triangles.

Bien entendu cela dépend des applications, les triangles pourront en variante être isocèles. En variante ils pourront avoir une autre forme.

Dans tous les cas les anneaux centraux 136 des surfaces radiales 11 d'un premier plan sont reliés aux anneaux centraux 136 d'un second plan par des bras inclinés 211.

Il est prévu également un réseau de bandes de matière 113 moins large que les bras 211.

Certaines bandes 113 sont dans le prolongement des unes des autres et relient ainsi entre eux des anneaux éloignés 136.

Une bande 113 constitue une bande de matière entre les deux anneaux 136 des surfaces inférieures 11.

Certaines au moins de ces bandes 113 portent des pions saillants d'écartement décrits ci-après. Une bande 113 constitue une bande de liaison entre les deux surfaces d'appui inférieures 11.

En pratique la majorité de ces bandes 113 constituent les médiatrices des côtés des trois triangles précités et les pions 22 sont implantés au niveau du centre de gravité de ces triangles en étant portés au moins en partie par des bandes 113.

Pour plus de précisions sur le nombre de bras 211, 311, de bandes de matière 113, de fenêtres 111 et leur agencement on se reportera aux figures 5 et 7.

Les flasques 6, 7 ajourés sont ainsi grillagés et plus large au niveau de leur partie supérieure recevant trois cellules, qu'au niveau de leur partie inférieure recevant deux cellules comme visible dans cette figure 5.

Les flasques 6, 7 sont moins rigides grâce aux bras 211 et aux bandes de matières 113. Ils sont aisément obtenus par moulage.

Toutes ces dispositions permettent de réduire la matière des flasques 6, 7 électriquement isolants et d'alléger ceux-ci. Ces flasques autorisent le passage de résine thermo-conductrice et collante de manière décrite ci-après.

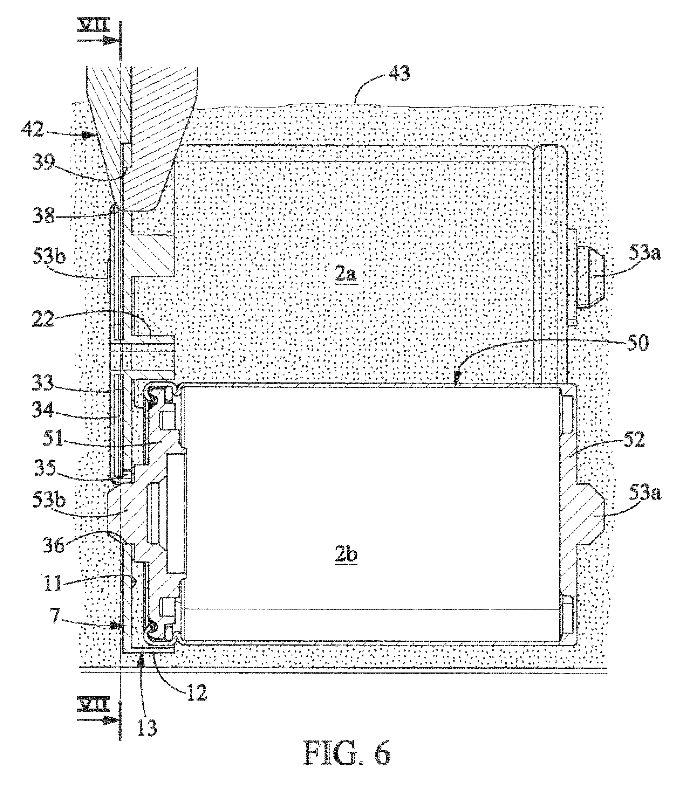

Chacune des cellules de stockage d'énergie peut être un condensateur à double-couche électrique (EDLC), qui comprend un pôle électrique négatif 53a sur un côté axial de la cellule et un pôle électrique positif 53b sur le côté opposé (voir figure 6).

L'ensemble des dix cellules de stockage d'énergie est disposé électriquement en série grâce notamment à quatre barres conductrices de raccordement 14ab, 14bc, 14cd, 14de permettant de connecter électriquement deux paires de cellules entre elles.

Les barres 14ab, 14bc, 14cd, 14de électriquement conductrices pourront être métalliques en étant par exemple en Aluminium. Les barres 14ab, 14bc, 14de sont globalement de forme rectangulaires. La barre 14cd à une forme spéciale comme visible dans les figures 1 à 3 pour avoir une section permettant le passage du courant.

L'ensemble 10 comprend une borne positive 15a et une borne négative 15b située sur la face avant de l'ensemble 10. Les bornes 15a, 15b sont globalement en forme d'équerre. Ces bornes 15a, 15b électriquement conductrices pourront être métalliques en étant par exemple en Aluminium. La borne positive 15a est soudée au pôle positif de la cellule 1a. Le pôle positif de chacune des cellules 1a, 2a est orienté vers la face avant, comme illustré par la flèche de l'axe 3a. La barre de raccordement 14ab relie le pôle négatif de la cellule 2a au pôle positif de la cellule 2b. Le pôle positif de chacune des cellules 2b et 1b est orienté vers la face arrière. Le pôle négatif de la cellule 1b est connecté au pôle positif de la cellule 1c grâce à la barre 14bc sur la face avant. Le pôle positif de chacune des cellules 1c, 2c est orienté vers la face avant. La barre de raccordement 14cd relie le pôle négatif de la cellule arrière 2c au pôle positif de la cellule avant 1d. Cette barre 14cd permet d'absorber les dilatations suite aux échauffements des cellules. Elle comporte (Figures 1 et 2) une portion principale 114 parallèle à l'axe 3c et à chacune de ses extrémité une branche transversale 115 pour liaison électrique respectivement avec le pôle négatif de la cellule arrière 2c et avec le pôle positif de la cellule avant 1d. La barre 14 cd présente également une portion secondaire 116 de rigidification et d'augmentation de passage du courant s'étendant globalement perpendiculairement par rapport à sa portion principale 114 en étant à distance des corps des cellules 1d, 2d. Le pôle positif de chacune des cellules 1d et 2d est orienté vers l'avant et celui des cellules 2e et 1e est orienté vers l'arrière. Le pôle négatif de la cellule 2d et le pôle positif de la cellule 2e sont reliés grâce à la barre 14de située sur la face arrière de l'ensemble 10. La borne négative 15b est soudée au pôle négatif de la cellule 1e.

L'ensemble 10 comprend également une série de fils 16 reliant chacune des cellules de stockage d'énergie à un connecteur avant 17. Les fils 16 sont maintenus en position sur l'ensemble 10 grâce à leur raccordement d'extrémité et grâce à un orifice 38 ménagé dans le flasque avant 6.

Comme illustré aux figures 1 et 3, le flasque avant 6 comprend une série d'ergots 19 faisant saillie à partir du flasque et immobilisant la barre 14bc soit par rapport au flasque avant 6.

En variante des ergots (non représentés) pourront être prévus pour immobiliser les bornes 15a, 15b.

Le flasque arrière 7 pourra être dépourvu d'ergots 19. En variante le flasque arrière 7 pourra présenter également une série d'ergots (non représentés à la figure 2) pour immobilisés les barres 14ab et 14de.

Les flasques 6, 7 de structure identique peuvent donc être différents l'un de l'autre uniquement par le nombre d'ergots 19.

Le pôle positif de la cellule 1c est soudé à la barre 14bc par plusieurs points de soudure 20, soit par une soudure laser continue, par exemple par un faisceau laser 21 (voir figure 3).

Dans une variante non illustrée, les fils souples 16 peuvent être fixés ou guidés indirectement sur le flasque 6 grâce à un pion fixé dans l'orifice 38 du flasque 6. Cela permet de pré-assembler un harnais constitué des onze fils souples 16 pour les 10 cellules.

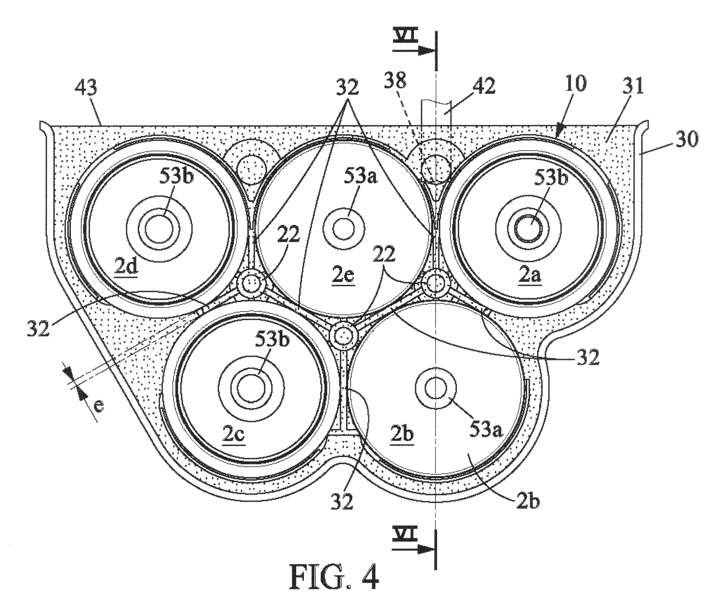

Comme illustré en figure 4, le deuxième mode de réalisation de stockeur d'énergie comprend l'ensemble 10 préalablement décrit qui est introduit verticalement dans une cuve 30 conductrice de chaleur, ici métallique en étant par exemple en aluminium, le tout étant noyé totalement ou partiellement (par exemple 1/3 ou 2/3) dans de la résine 31 thermo-conductrice et isolante électriquement. Cette résine est avantageusement collante.

Un bon ancrage des flasques 6, 7 dans la cuve 30 est ainsi réalisé du fait que ces flasques 6, 7 sont ajourés et grillagés.

Cette cuve 30 est configurée pour épouser la forme des cellules et réduire au minimum son encombrement comme visible à la figure 6. Elle comporte donc des portions arrondies avec présence d'un faible intervalle entre ces portions arrondies et les cellules avec interposition des saillies 12.

Suivant une caractéristique et comme visible à la figure 6 les saillies 12 évitent tout contact entre la cuve et les cellules. Ces saillies sont en regard de portions arrondies de la cuve 30. On notera que les dégagements 112 autorisent le passage de la résine.
A titre d'exemple on peut utiliser comme résine une résine du type polyuréthane à deux composants dont l'un est un durcisseur.
Par exemple on peut utiliser une résine à deux composants vendue par la société RAIGI sous la référence RAIGITANE 4759/RAIGIDUR HR formant un système polyuréthanne liquide à température ambiante. Cette résine de couleur noir est souple (50 Shore HR) et a une excellente résistance aux chocs thermiques, et une très bonne adhérence sur les pièces métalliques et plastique. Cette résine est donc collante.
En variante on peut utiliser un système polyuréthanne à deux composant vendu par la société WEVO (résine PD4431FL et durcisseur 300) de dureté Shore de 50-55.

Le flasque arrière 7, et donc le flasque avant 6 de structure identique au flasque 7, comprend trois pions d'écartement 22 également visibles en figures 5 et 6. Chacun des pions d'écartement 22 est situé au centre de chaque groupe de trois cellules de manière à maintenir un écart minimum « e » à chaque endroit où deux cellules de stockage d'énergie sont adjacentes. Les pions d'écartement 22 saillants axialement coopèrent avec les saillies axiales 12 en forme d'arc de cercle pour constituer la pluralité d'éléments de maintien 13 permettant d'immobiliser et de positionner chacune des cellules arrières à une distance minimum « e » les unes des autres. Autrement dit, chacune des cellules est séparée par un espace 32 présentant une distance supérieure au seuil « e ».

Plus précisément les pions 22 sont dans ce mode de réalisation de forme creuse. Ils sont de forme cylindrique et saillant axialement dans le même sens que les saillies axiales 12. Les saillies 12 et les pions 22 sont globalement de même longueur axiale comme visible à la figure 6. Ils s'étendent à la périphérie externe des cellules

Les pions de manière précitée sont implantés en triangle, comme mieux visible dans les figures 4 à 7. Ils sont reliés entre eux par des bandes de matière 113.
Chaque pion est implanté à la faveur des bandes de matières 113 au niveau du centre de gravité d'un triangle de manière précitée.
Le pion 22, dit pion inférieur, est positionné entre les cellules inférieures respectivement 2b, 2c- 1b, 1c et la cellule supérieure respectivement 2e, 1e. Les deux autres pions 22, dits pions supérieures, sont positionnés entre, d'une part les cellules respectivement 2a, 2e, 2b et 1a, 1b, 1e et d'autre part respectivement entre les cellules respectivement 2e, 2c, 2d et 1e, 1c, 1d.

Comme illustré en figure 6, chacune des cellules de stockage d'énergie comprend un corps principal 50 et un capot 51. Le corps principal 50 présente un fond 52 ayant une forme extérieure similaire à la forme extérieure du capot 51 de sorte que le fond 52 comprend un pôle central 53a, constituant le pôle négatif de la cellule. De même, le capot 51 comprend un pôle central 53b constituant le pôle positif de la cellule. Le corps 50 à fond 52 et le capot 51 sont dans cet exemple électriquement conducteur.

Le capot 51 est fixé par sertissage au corps 50 présentant un bourrelet à cet effet avec intervention d'un joint comme visible à la figure 6. Ce capot 51 présente plusieurs changements de diamètre. Le pôle 53b s'étend en saillie axiale à partir de l'épaulement de plus petit diamètre du capot 51, tandis que le pôle 53a s'étend en saillie axiale a partir du fond 52. Les pôles 53a et 53b ont dans ce mode de réalisation la même taille. On notera que les saillies 12 et les pions 22 s'étendent en vis-à-vis de la zone de sertissage du corps 50 au capot 51.

Le corps principal 50 présente donc une partie ou portion principale cylindrique et un fond 52 d'extrémité. Il est fermé à son autre extrémité par le capot 51 formant un couvercle.

Ainsi chacun des deux pôles 53a, 53b fait saillie d'une partie principale, qui est dans ce mode de réalisation cylindrique de la cellule et sert à la fois de raccordement électrique et de positionnement mécanique. L'extrémité libre de ces pôles est chanfreinée pour introduction dans les orifices de guidage 36 du flasque 6, 7 concerné. Ces pôles de forme cylindrique traversent les flasque 6, 7 et ont une longueur supérieure à l'épaisseur du flasque.

Les fond 52 et les capots 51 ont une autre fonction. Plus précisément une extrémité d'un fil électrique 16 est reliée au connecteur 17 et l'autre extrémité de ce fil 16 est reliée à la périphérie externe du capot 51 ou du fond 52 de la cellule concernée via une cosse 16' dont une extrémité est fixée de manière précitée par sertissage sur l'extrémité dénudée du fil 16 comme mieux visible à la figure 3. L'autre extrémité de la cosse 16' est fixée de manière décrite ci-après sur la périphérie externe du capot 51 ou le fond 52 de la cellule concernée.

Il ressort de ce qui précède que le capot 51 est destiné à venir en contact via son épaulement de plus petit diamètre avec la face arrière de l'anneau d'appui 136, tandis que le fond 52 est destiné à venir en contact avec la surface radiale 11 concernée concerné. Un faible jeu axial existe entre la périphérie externe du capot 51 et le flasque 6, 7 de sorte que la résine peut pénétrer entre le capot 51 et le flasque 6, 7. Les surfaces radiales 11 sont des surfaces d'appui pour les fonds 52 des cellules, tandis que les anneaux 136 sont des surfaces radiales d'appui pour les pôles 53b. Les surfaces 11 sont donc des surfaces radiales d'appui au moins centralement pour les cellules.

Les pôles 53a, 53b, le corps 50 et le capot 51 des cellules pourront être en aluminium et les barres conductrices de raccordement 14ab, 14bc, 14cd, 14de en aluminium pour faciliter le soudage du type laser précité.

Dans un mode de réalisation tous les pions 22 sont portés par les bandes de matière 113.

En variante certaines bandes de matière 113 sont remplacées par des montants verticaux, qui s'étendent des anneaux 136 des surfaces internes 11 aux zones de jonction entre deux surfaces externes 11. Ces montants constituent les médiatrices des triangles externes, qui passent par les centres de gravités de ces triangles et portent les pions 22. On peut tirer parties de ces montants référencés en 33 à la figure 5.

Ainsi on va maintenant décrire, en référence aux figures 5 à 7, une cheminée de dégazage 34 qui peut être constituée par un conduit intérieur vide 34 s'étendant à l'intérieur de deux montants verticaux 33 des flasques 6, 7. Le conduit intérieur 34 s'étend par exemple depuis une ouverture intérieure 35 située au voisinage d'un orifice de guidage 36 d'un pôle central 53b de la cellule respectivement 1b, 2b. Le conduit intérieur 34 peut présenter également une ouverture extérieure 38 située à l'arrière du flasque 6 ou 7, et à l'alignement d'un orifice 39 servant de crochet de préhension 39. En effet, en cas de dégradation de la cellule 1b, 2b, d'éventuelles émanations gazeuses peuvent s'échapper de la cellule. De telles émanations gazeuses accidentelles sont alors recueillies par l'ouverture intérieure 35 et peuvent rejoindre l'extérieur par le conduit, évitant ainsi l'explosion du stockeur.

La même chose se produit pour la cellule 2 c, 1c.

On va maintenant décrire un procédé de fabrication du deuxième mode de réalisation. Chacune des dix cellules est assemblée dans le sens souhaité et immobilisée entre les flasques avant 6 et arrière 7. Les barres de raccordement 14ab, 14bc, 14cd, 14de sont encliquetées sur les flasques correspondants puis des soudures laser 20 solidarisent les plaques aux pôles centraux des cellules concernées. Enfin, le harnais de fils souple 16 est raccordé à chacune des cellules. L'ensemble 10 décrit ci-dessus forme ainsi un ensemble monobloc. Des pinces d'accrochage 42 permettent de saisir en bloc l'ensemble 10 grâce au crochet de préhension 39, les pinces d'accrochage sont également dimensionnées de manière à obstruer l'ouverture supérieure 38 des cheminées de dégazage 34. L'ensemble 10 est introduit grâce aux pinces d'accrochage 42 dans la cuve 30. Les crochets 39 sont en forme d'oreille. Ils sont implantés chacune entre deux surfaces supérieures 11 comme mieux visible dans les figures 5 et 7. Ces crochets sont donc troués centralement en 38, l'un des trous 38 servant au passage des fils 16 de manière précitée et comme visible à la figure 1

Le positionnement de l'ensemble 10 dans la cuve 30 peut être assuré directement par une surface de guidage non représentée du flasque, prenant appui sur la cuve 30. Dans une variante, le positionnement peut être assuré temporairement par des pinces d'accrochage 42 ou par tout autre outil intermédiaire permettant de centrer l'ensemble 10 dans la cuve 30 et qui ne reste pas à demeure dans le stockeur d'énergie une fois que la résine 31 s'est solidifiée. De la résine 31 est ensuite coulée dans la cuve jusqu'à un niveau libre 43. Les pinces d'accrochage 42 sont alors déverrouillées et l'empreinte laissée libre dans la résine 31 assure la continuité entre l'ouverture supérieure 38 et le niveau libre 43.

Dans une variante, le niveau libre 43 ne recouvre pas la totalité des cellules.

Dans une autre variante, le conduit intérieur 34 remonte jusqu'au niveau libre 43. Il est également possible que les crochets de préhension 39 fassent saillie hors du niveau libre 43.

Le stockeur d'énergie comprend une pluralité de cellules de stockage d'énergie ainsi qu'un élément de maintien desdites cellules de manière que subsiste entre chaque paire de cellules adjacentes un espace de distance supérieure à un seuil déterminé. Cet élément de maintien facilite l'assemblage et permet d'optimiser la capacité globale sans dégrader l'évacuation des calories engendrées lors du fonctionnement électrique des cellules.

Ainsi qu'il ressort de la description et des dessins le stockeur d'énergie comprend une série d'éléments conducteurs de raccordement reliant électriquement chaque pôle électrique d'une des cellules à une borne électrique du stockeur et/ou à un pôle électrique d'une autre cellule.

Ces éléments conducteurs consistent, d'une part, en les fils 16 dont les cosses d'extrémités 16' sont en forme d'équerre et sont soudées, par exemple par soudage laser, ou brasé sur la périphérie externe du fond 52 ou du capot 51 concerné d'une cellule et d'autre part, en des barres conductrices 14ab, 14bc, 14 cd et 14de. On notera que la borne négative 15e présente un dégagement avec formation d'une languette (Non référencée) pour liaison électrique avec l'extrémité d'un fil électrique reliée au connecteur 17.

Les éléments de raccordement électriques ont une forme simple et économique, la barrette 14cd étant obtenue par découpe et pliage.

Ainsi les coûts de raccordement électrique sont réduits.

Les bornes 15a, 15b ont également une forme simple.

Il est à noter que le pôle positif 53a de la cellule 2a est solidaire du pôle négatif 53b de la cellule 1a.

Il en est de même en ce qui concerne les cellules 2d, 1b et 2c, 1c. Pour les cellules d'une part 2e, 1e et d'autre part, 2b ,1b c'est l'inverse.

Ainsi les pôles opposés des cellules associées et alignées sont fixée par exemple par soudage laser de sorte que l'on obtient cinq paires de cellules d'un seul tenant de sorte que la présence d'entretoise entre les flasques est inutile. Les flasques présentent une pluralité de moyens d'assemblage s'étendant en saillie axiale sur une faible longueur. Ils ont une forme simple et présentent le minimum de matière.

Ces flasques sont configurés pour créer des dégagements, notamment latéralement entre les cellules 2d, 2c- 1d, 2c de sorte que le positionnement de la barre 14cd par rapport aux cellules précitées est tel que le flasque ne s'étend pas au voisinage de l'endroit de la barre conductrice raccordée électriquement au pôle de la cellule.

Toutes ces dispositions permettent de réduire les coûts d'assemblage.

Bien entendu l'invention n'est pas limitée par le nombre, la forme ou la nature des cellules. De même pour le nombre de couches/plans.

Ainsi le nombre de cellules peut être supérieur ou inférieur à 10. Il peut y avoir plus de deux couches. Les cellules peuvent ne pas être regroupées par paire.

Les cellules peuvent consister en variante en des batteries du type lithium-ion. Elles peuvent avoir en variante un corps principal, qui au lieu de comporter une portion principale cylindrique fermé par son fond 52 et par le capot 51 (Voir figure 6) comporte un corps principal doté d'une portion principale de forme polygonale fermé par un fond et par le capot 51 de forme complémentaire. Il en est alors de même des saillies 12 et des portions en vis-à-vis de la cuve.

Les orifices 36 et les pôles 53a, 53b peuvent avoir en variante une forme polygonale.

Dans tous les cas l'orifice 36 est un orifice de guidage des pôles.

Bien entendu la portion ou partie principale d'au moins une cellule pourra être recouverte d'un film électriquement isolant.

Dans tous les cas les éléments de maintien 13 comportent une pluralité de pions 22 saillant d'écartement entre les cellules et de saillies axiales 12 présentant chacune une forme correspondante à celle de l'extrémité périphérie externe de chacune des cellules.

Il est prévu également une pluralité de surfaces radiales coplanaires formant un épaulement avec les saillies axiales, qui s'étendent à la périphérie externe de surfaces radiales et sont configurées pour maintenir l'extrémité périphérique de la cellule concernée. Les pions 22 s'étendent axialement et ce globalement sur la même longueur que les saillies 12.

Bien entendu le flasque 7 peut être dépourvu d'ergots 19 ou comporter plus d'ergots pour immobiliser les barres 14de et 14ab de manière précitée.

L'un des flasques 6, 7 peut avoir un nombre de fenêtres 111 inférieur à celui de l'autre flasque 7, 6.

L'un des flaques 6, 7, doté des surfaces 11, des saillies 12 et des pions 22, peut être plein et l'autre ajouré et grillagé pour un bon passage de la résine de sorte que les deux flasques 6, 7 peuvent ne pas avoir la même structure.

Au lieu de fixation par soudage laser on peut réaliser un autre type de soudage ou des brasages. Les barrettes, les bornes électriques, les corps des cellules, les capots des cellules et donc les pôles des cellules sont en variante en cuivre.

Les portions 114, 116 de la barre 14cd sont en variante remplacées par une barre de section circulaire sur laquelle on fixe les branches 115.

## Revendications

1. Stockeur d'énergie électrique pour véhicule automobile, comprenant une pluralité de cellules (1a, 1b, 1c, 1d, le - 2a, 2b, 2c, 2d , 2e) de stockage d'énergie électrique d'orientation axiale, **caractérisé en ce qu'**il comprend au moins un flasque (6, 7) ajouré présentant une pluralité de saillies axiales (12) présentant chacune une forme correspondante à celle de l'extrémité périphérie externe de chacune des cellules et de pions saillant d'écartement (22) entre les cellules (1a, 1b, 1c, 1d, 1e - 2a, 2b, 2c, 2d , 2e) pour formation d'éléments de maintien (13), chacun des éléments de maintien coopérant avec une des cellules pour maintenir la cellule dans une position fixe relativement aux autres cellules, **en ce que** le flasque (6, 7) est en matière électriquement isolante et présente une pluralité de surfaces radiales (11) coplanaire formant un épaulement avec les saillies axiales (12), qui s'étendent à la périphérie externe de surfaces radiales et sont configurées pour maintenir l'extrémité périphérique de la cellule concernée et **en ce que** chacune des cellules est séparée des autres cellules par un espace (32) d'une distance supérieure à un seuil (e) déterminé à la faveur des élément de maintien (13), dans lequel chaque cellule présente au moins deux pôles électriques (53a, 53b) et dans lequel les surfaces radiales (11) du flasque (6, 7) comprennent chacune un orifice de guidage (36) traversé par un des pôles électriques (53a, 53b) d'une des cellules.

2. Stockeur selon la revendication 1, comprenant au moins trois cellules s'étendant axialement suivant des axes (3a, 3b, 3c, 3d, 3e) parallèles en étant réparties dans au moins deux plans (4, 5) parallèles, les axes des cellules (1b, 1c) d'un premier plan (5) étant intercalés par rapport aux axes des cellules (1a, 1e, 1a) d'un second plan (4) adjacent au premier plan, suivant une direction qui est parallèle aux premier et second plans et orthogonale aux axes des cellules et dans lequel chaque pion d'écartement (22) est situé au centre de chaque groupe de trois cellules de manière à maintenir un écart minimum « e » à chaque endroit ou deux cellules de stockage d'énergie sont adjacentes.

3. Stockeur selon la revendication 2, dans lequel chaque surface radiale (11) comporte au moins deux fenêtres (111) et un anneau central (136) et dans lequel l'orifice de guidage (36) constitue l'orifice central de l'anneau central (136) formant une surface d'appui pour la cellule concernée.

4. Stockeur selon la revendication 3, dans lequel les anneaux centraux (136) des surfaces radiales (11) d'un premier plan sont reliés aux anneaux centraux (136) des surfaces radiales (11) d'un second plan par des bras inclinés (211).

5. Stockeur selon la revendication 4, dans lequel les pions (22) sont reliés aux anneaux centraux (136) des surfaces radiales (11) d'un premier et d'un second plan au moins par des bandes de matières (113) moins larges que les bras (211).

6. Stockeur selon l'une quelconque des revendications précédentes, présentant au moins deux bornes électriques et comprenant une série d'éléments conducteurs de raccordement reliant électriquement chaque pôle électrique (53a) d'une des cellules à une borne électrique (15a, 15e) du stockeur et/ou à un pôle électrique d'une autre cellule et dans lequel la série d'éléments conducteurs de raccordement comprend, d'une part, une ou plusieurs barres conductrices (14bc), laquelle barre est encliquetée dans le flasque (6), et/ou est maintenue par des ergots (19) faisant saillie du flasque, ou est en partie noyée dans le flasque par surmoulage dudit flasque et d'autre part, au moins un fil souple (16) fixé au flasque (6) ou guidé par rapport au flasque, soit directement par une forme adaptée du flasque, soit indirectement par un élément rapporté sur le flasque.

7. Stockeur selon l'une quelconque des revendications précédentes, dans lequel les cellules comprennent une portion cylindrique appartenant à un corps principal (50) fermé par un capot (51) et présentant un fond (52), les deux pôles électriques (53a, 53b) étant centrés radialement et faisant saillie axialement de la portion cylindrique en appartenant respectivement au fond (52) et au capot (51).

8. Stockeur selon l'une quelconque des revendications précédentes, comprenant deux flasques (6, 7) en regard l'un de l'autre, entre lesquels sont disposées les cellules.

9. Stockeur selon les revendications 2 et 8 prises dans leur ensemble, dans lequel le flasque (7) présente un conduit (34) intérieur vide s'étendant entre une ouverture extérieure (38) située au voisinage d'un plan extrême (4) de répartition des cellules et une ouverture intérieure (35) située au voisinage d'un orifice (36) de guidage d'une cellule d'un autre plan (5).

10. Stockeur selon l'une quelconque des revendications précédentes, comprenant une cuve (30) conductrice thermiquement, le flasque (7) présentant au moins une surface de guidage extérieure coopérant directement ou indirectement avec la cuve (30) pour positionner les cellules dans la cuve de manière que chacune des cellules (1a-1e ; 2a-2e) soit séparée de la cuve par un espace d'une distance supérieure à un seuil (e) déterminé.

11. Stockeur selon les revendications 9 et 10 prises dans leur ensemble, dans lequel toutes les cellules de stockage d'énergie du stockeur sont plongées au moins en partie dans de la résine (31) thermo-conductrice et isolante électriquement et dans lequel la résine (31) présente une interface avec l'air atmosphérique (43) dans la cuve, l'ouverture extérieure (38) du conduit étant située au voisinage de ladite interface (43).

12. Stockeur selon la revendication 10 ou 11 prises en combinaison avec la revendication 8, comprenant une cuve (30) configurée pour épouser la forme des cellules, ladite cuve présentant des portions arrondies avec présence d'un faible intervalle entre les cellules et les portions arrondies de la cuve et interposition des saillies (12).

13. Stockeur selon l'une des revendications précédentes, dans lequel au moins un flasque (6, 7) comprend au moins un crochet de préhension (39).

14. Procédé de fabrication d'un stockeur d'énergie électrique pour véhicule selon l'une quelconque des revendication précédentes, dans lequel on positionne plusieurs cellules (1a-1e) de stockage d'énergie à une distance minimum les unes des autres supérieure à un seuil, en assemblant chacune d'elles sur un flasque commun (6).

15. Procédé de fabrication selon la revendication 14, dans lequel on assemble au moins une barre conductrice (14bc) sur le flasque commun (6), puis on soude ou brase un pôle électrique (53a) d'une ou de plusieurs cellules sur la barre.

16. Procédé de fabrication selon la revendication 14, dans lequel on introduit un ensemble (10) fabriqué selon la revendication 13 dans une cuve (30), puis on insère de la résine (31) dans les espaces (32) entre les cellules et entre les cellules et la cuve (30).

## Patentansprüche

1. Elektrischer Energiespeicher für ein Kraftfahrzeug, umfassend eine Vielzahl elektrischer Energiespeicherzellen (1a, 1b, 1c, 1d, 1e - 2a, 2b, 2c, 2d, 2e) mit axialer Ausrichtung, **dadurch gekennzeichnet, dass** er mindestens einen durchbrochenen Flansch (6, 7) umfasst, der eine Vielzahl Axialvorsprünge (12) aufweist, wobei jeder eine Form, die derjenigen des äußeren Umfangsendes jeder der Zellen entspricht, und hervorstehende Abstandszapfen (22) zwischen den Zellen (1a, 1b, 1c, 1d, 1e - 2a, 2b, 2c, 2d, 2e) zur Ausbildung von Halteelementen (13) aufweist, wobei jedes der Halteelemente mit einer der Zellen zum Halten der Zelle in einer festen Position relativ zu den anderen Zellen zusammenwirkt, dass der Flansch (6, 7) aus elektrisch isolierendem Material ist und eine Vielzahl komplanarer Radialflächen (11) aufweist, die eine Schulter mit den Axialvorsprüngen (12) bilden, die sich zu dem Außenumfang der Radialflächen erstrecken und konfiguriert sind, das Umfangsende der betroffenen Zelle zu halten, und dass jede der Zellen von den anderen Zellen durch einen Zwischenraum (32) eines Abstands größer als eine Schwelle (e) getrennt ist, die zu Gunsten der Halteelemente (13) bestimmt ist, in dem jede Zelle mindestens zwei elektrische Pole (53a, 53b) aufweist und in dem jede der Radialflächen (11) des Flansches (6, 7) ein Führungsloch (36) umfasst, das von einem der elektrischen Pole (53a, 53b) einer der Zellen durchquert wird.

2. Speicher nach Anspruch 1, umfassend mindestens drei Zellen, die sich axial gemäß parallelen Achsen (3a, 3b, 3c, 3d, 3e) erstrecken, indem sie in mindestens zwei parallelen Ebenen (4, 5) verteilt sind, wobei die Achsen der Zellen (1b, 1c) einer ersten Ebene (5) in Bezug auf die Achsen der Zellen (1a, 1e, 1a) einer zur ersten Ebene angrenzenden zweiten Ebene (4) eingefügt sind, in einer Richtung, die parallel zu der ersten und zweiten Ebene und orthogonal zu den Achsen der Zellen ist, und in dem jeder Abstandszapfen (22) im Zentrum jeder Gruppe von drei Zellen in einer Weise angeordnet ist, bei jedem Ort, wo zwei Energiespeicherzellen angrenzend sind, einen Minimalabstand « e » einzuhalten.

3. Speicher nach Anspruch 2, in dem jede Radialfläche (11) mindestens zwei Fenster (111) und einen Zentralring (136) aufweist, und in dem das Führungsloch (36) das Zentralloch des Zentralrings (136) darstellt, wobei er eine Auflagefläche für die betroffene Zelle bildet.

4. Speicher nach Anspruch 3, in dem die Zentralringe (136) der Radialflächen (11) einer ersten Ebene mit den Zentralringen (136) der Radialflächen (11) einer zweiten Ebene durch Spreizarme (211) verbunden sind.

5. Speicher nach Anspruch 4, in dem die Zapfen (22) mit den Zentralringen (136) der Radialflächen (11) einer ersten und einer zweiten Ebene mindestens durch Materialstreifen (113) verbunden sind, die schmaler als die Arme (211) sind.

6. Speicher nach einem der vorhergehenden Ansprüche, der mindestens zwei elektrische Anschlüsse aufweist und eine Reihe Verbindungsleitungselemente umfasst, die elektrisch jeden elektrischen Pol (53a) einer der Zellen mit einem elektrischen Anschluss (15a, 15e) des Speichers und/oder mit einem elektrischen Pol einer anderen Zelle verbinden, und in dem die Reihe Verbindungsleitungselemente einerseits eine oder mehrere Stromschienen (14bc) umfasst, wobei die Schiene in den Flansch (6) eingerastet ist, und/oder durch Zentrierzapfen (19), die von dem Flansch vorspringen, festgehalten ist, oder zum Teil in den Flansch durch Umspritzen des Flansches eingebettet ist, und andererseits mindestens einen flexiblen Draht (16), der auf dem Flansch (6) befestigt oder bezüglich des Flansches geführt ist, entweder direkt durch eine angepasste Form des Flansches oder indirekt durch ein auf dem Flansch angebrachtes Element.

7. Speicher nach einem der vorhergehenden Ansprüche, in dem die Zellen einen Zylinderteil aufweisen, der zu einem durch einen Deckel (51) verschlossenen Hauptkörper (50) gehört, der einen Boden (52) aufweist, wobei die zwei elektrischen Pole (53a, 53b) radial zentriert sind und axial von dem Zylinderteil abstehen, indem sie jeweils dem Boden (52) und dem Deckel (51) zugehören.

8. Speicher nach einem der vorhergehenden Ansprüche, der zwei einander gegenüberliegende Flansche (6, 7) umfasst, zwischen denen die Zellen angeordnet sind.

9. Speicher nach den in ihrer Gesamtheit genommenen Ansprüchen 2 und 8, in dem der Flansch (7) eine hohle Innenleitung (34) aufweist, die sich zwischen einer in der Nähe einer äußersten Ebene (4) der Verteilung der Zellen angeordneten Außenöffnung (38) und einer in der Nähe eines Führungslochs (36) einer Zelle einer anderen Ebene (5) angeordneten Innenöffnung (35) erstreckt.

10. Speicher nach einem der vorhergehenden Ansprüche, umfassend einen thermisch leitenden Behälter (30), wobei der Flansch (7) mindestens eine Außenführungsfläche aufweist, die direkt oder indirekt mit dem Behälter (30) zusammenwirkt, um die Zellen in dem Behälter in einer Weise zu positionieren, dass jede der Zellen (1a - 1e; 2a - 2e) von dem Behälter durch einen Zwischenraum eines Abstands größer als eine bestimmte Schwelle (e) getrennt ist.

11. Speicher nach den in ihrer Gesamtheit genommenen Ansprüchen 9 und 10, in dem alle Energiespeicherungszellen des Speichers mindestens zum Teil in thermisch leitendes und elektrisch isolierendes Harz (31) getaucht sind und in dem das Harz (31) eine Grenzfläche mit der Atmosphärenluft (43) in dem Behälter aufweist, wobei die Außenöffnung (38) der Leitung in der Nähe der Grenzfläche (43) angeordnet ist.

12. Speicher nach in Verbindung mit dem Anspruch 8 genommenen Anspruch 10 oder 11, umfassend einen Behälter (30), der konfiguriert ist, sich an die Form der Zellen anzupassen, wobei der Behälter gerundete Teile mit dem Vorliegen eines geringen Abstands zwischen den Zellen und den gerundeten Teilen des Behälters und der Einfügung der Vorsprünge (12) aufweist.

13. Speicher nach einem der vorhergehenden Ansprüche, in dem mindestens ein Flansch (6, 7) mindestens eine Haltevorrichtungsklammer (39) umfasst.

14. Verfahren zur Herstellung eines elektrischen Energiespeichers für ein Fahrzeug nach einem der vorhergehenden Ansprüche, in dem mehrere Energiespeicherungszellen (1a - 1e) zueinander in einem Mindestabstand größer als eine Schwelle anordnet werden, indem jede von ihnen auf einem gemeinsamen Flansch (6) montiert wird.

15. Herstellungsverfahren nach Anspruch 14, in dem mindestens eine Stromschiene (14bc) auf dem gemeinsamen Flansch (6) montiert wird, wonach ein elektrischer Pol (53a) einer oder mehrerer Zellen auf die Schiene geschweißt oder hartgelötet wird.

16. Herstellungsverfahren nach Anspruch 14, in dem eine nach Anspruch 13 hergestellte Baugruppe (10) in einen Behälter (30) eingeführt wird, wonach Harz (31) in die Zwischenräume (32) zwischen den Zellen und zwischen den Zellen und dem Behälter (30) eingefügt wird.

## Claims

1. Electrical energy store for a motor vehicle, comprising a plurality of axially oriented electrical energy storage cells (1a, 1b, 1c, 1d, 1e - 2a, 2b, 2c 2d, 2e), **characterized in that** it comprises at least one perforated flange (6, 7) having a plurality of axial projections (12) each having a shape corresponding to that of the external peripheral end of each of the cells and of projecting spacer pins (22) between the cells (1a, 1b, 1c, 1d, 1e - 2a, 2b, 2c, 2d, 2e) to form retaining elements (13), each of the retaining elements collaborating with one of the cells in order to hold the cell in a fixed position relative to the other cells, **in that** the flange (6, 7) is made of an electrically insulating material and has a plurality of coplanar radial surfaces (11) forming a shoulder with the axial projections (12), which extend at the external periphery of radial surfaces and are configured to hold the peripheral end of the relevant cell and **in that** each of the cells is separated from the other cells by a space (32) of a distance greater than a threshold (e) determined with reference to the retaining elements (13), in which each cell has at least two electrical poles (53a, 53b), and in which the radial surfaces (11) of the flange (6, 7) each comprise a guide orifice (36) through which one of the electrical poles (53a, 53b) of one of the cells passes.

2. Store according to Claim 1, comprising at least three cells extending axially along parallel axes (3a, 3b, 3c, 3d, 3e) and distributed in at least two parallel planes (4, 5), the axes of the cells (1b, 1c) of a first plane (5) being intercalated with respect to the axes of the cells (1a, 1e, 1a) of a second plane (4) adjacent to the first plane, in a direction which is parallel to the first and second planes and orthogonal to the axes of the cells, and in which each spacer pin (22) is situated at the centre of each group of three cells so as to maintain a minimum separation "e" at each point where two energy storage cells are adjacent.

3. Store according to Claim 2, in which each radial surface (11) comprises at least two windows (111) and a central ring (136) and in which the guide orifice (36) constitutes the central orifice of the central ring (136), forming a bearing surface for the relevant cell.

4. Store according to Claim 3, in which the central rings (136) of the radial surfaces (11) of a first plane are connected to the central rings (136) of the radial surfaces (11) of a second plane by inclined arms (211).

5. Store according to Claim 4, in which the pins (22) are connected to the central rings (136) of the radial surfaces (11) of a first and of a second plane by at least strips of material (113) that are not as wide as the arms (211).

6. Store according to any one of the preceding claims, having at least two electrical terminals and comprising a series of conducting connecting elements electrically connecting each electrical pole (53a) of one of the cells to an electrical terminal (15a, 15e) of the store and/or to an electrical pole of another cell and in which the series of conducting connecting elements comprises, on the one hand, one or more conducting bars (14bc), which bar is clip-fastened into the flange (6) and/or is held in place by catches (19) projecting from the flange or is partially embedded in the flange by overmoulding of the said flange and, on the other hand, at least one flexible wire (16) fixed to the flange (6) or guided with respect to the flange, either directly by a suitable shape of the flange, or indirectly by an element attached to the flange.

7. Store according to any one of the preceding claims, in which the cells comprise a cylindrical portion belonging to a main body (50) closed by a cap (51) and having a bottom (52), the two electrical poles (53a, 53b) being centred radially and projecting axially from the cylindrical portion, belonging respectively to the bottom (52) and to the cap (51) thereof.

8. Store according to any one of the preceding claims, comprising two flanges (6, 7) facing one another, with the cells arranged between them.

9. Store according to Claims 2 and 8 considered together, in which the flange (7) has an empty internal passage (34) extending between an exterior opening (38) situated near an end plane (4) on which the cells are distributed and an interior opening (35) situated near a guide orifice (36) for a cell of another plane (5).

10. Store according to any one of the preceding claims, comprising a thermally conducting casing (30), the flange (7) having at least one exterior guide surface collaborating directly or indirectly with the casing (30) to position the cells in the casing in such a way that each of the cells (1a - 1e; 2a - 2e) is separated from the casing by a space measuring a distance greater than a determined threshold (e).

11. Store according to Claims 9 and 10 considered together, in which all the energy storage cells of the store are at least partially encapsulated in thermally conducting and electrically insulating resin (31) and in which the resin (31) has an interface with the atmospheric air (43) in the casing, the exterior opening (38) of the passage being situated near the said interface (43).

12. Store according to Claim 10 or 11 considered in combination with Claim 8, comprising a casing (30) configured to conform to the shape of the cells, the said casing having rounded portions with there being a small gap between the cells and the rounded portions of the casing and interposition of the projections (12).

13. Store according to one of the preceding claims, in which at least one flange (6, 7) comprises at least one hook (39) for grasping.

14. Method of manufacturing an electrical energy store for a vehicle according to any one of the preceding claims, in which several energy storage cells (1a - 1e) are positioned a minimum distance apart that is greater than a threshold value, each of these cells being assembled onto a common flange (6).

15. Method of manufacture according to Claim 14, in which at least one conducting bar (14bc) is assembled onto the common flange (6), then an electrical pole (53a) of one or several cells is soldered or brazed to the bar.

16. Method of manufacture according to Claim 14, in which an assembly (10) manufactured in accordance with Claim 13 is introduced into a casing (30), then resin (31) is inserted into the spaces (32) between the cells and between the cells and the casing (30).
